(19) **Europäisches Patentamt / European Patent Office / Office européen des brevets**

(11) **EP 4 611 205 A1**

(12) # EUROPEAN PATENT APPLICATION

(43) Date of publication:
**03.09.2025 Bulletin 2025/36**

(21) Application number: **24160256.4**

(22) Date of filing: **28.02.2024**

(51) International Patent Classification (IPC):
*H02J 3/24* (2006.01)      *H02J 3/28* (2006.01)
*H02J 15/00* (2006.01)

(52) Cooperative Patent Classification (CPC):
**H02J 3/241; H02J 3/24; H02J 3/28; H02J 15/008**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(71) Applicant: **Hitachi Energy Ltd**
**8050 Zürich (CH)**

(72) Inventors:
• **Johansson, Nicklas**
  **722 46 Västerås (SE)**

• **Zhang, Weichi**
  **100015 Beijing (CN)**
• **Svensson, Jan**
  **723 46 Västerås (SE)**
• **Yuan, ChunMing**
  **100062 Beijing (CN)**
• **Jayan, Vijesh**
  **723 59 Västerås (SE)**
• **Pan, Jiuping**
  **27606 Raleigh (US)**

(74) Representative: **AWA Sweden AB**
**Box 45086**
**104 30 Stockholm (SE)**

(54) ## A METHOD OF DAMPENING INTER-AREA OSCILLATIONS IN AN AC TRANSMISSION GRID

(57)      A method of dampening an inter-area oscillation in an alternating current (AC) transmission grid is provided. The inter-area oscillation in the AC transmission grid is dampened by means of a power controllable system, comprising a hydrogen production system, connected to the AC grid. The method comprises receiving (102) at least one parameter indicative of inter-area oscillation in the AC transmission grid. The method further comprises controlling (104) a power provided to the power controllable system based on the at least one parameter, in order to dampen the inter-area oscillation.

100

Receiving at least one parameter indicative of inter-area oscillation in the AC transmission grid — 102

Controlling a power provided to the power controllable system — 104

Fig. 1

EP 4 611 205 A1

# EP 4 611 205 A1

## Description

### Technical field

The present disclosure generally relates to the field of electric power transmission. In particular, it relates to a power oscillation damping (POD) controller for dampening an inter-area oscillation in an alternating current (AC) transmission grid, as well as a method and a system for dampening an inter-area oscillation in the alternating current (AC) transmission grid.

### Background

The alternating current (AC) transmission grid is a system of interconnected power lines and generators that deliver electric power from power plants to consumers. AC transmission grids use alternating current, which changes its direction and magnitude periodically, to allow for easy voltage conversion and long-distance transmission. AC transmission grids are the dominant form of infrastructure for transmitting electric power in most countries over their counterparts, DC transmission grids. However, AC transmission grids have certain limitations. The interaction between power generating and power consuming systems and the grid may cause oscillations in the frequency, voltage, or power flow. These oscillations may be caused by various factors such as load changes, faults, generator trips, or switching operations. The oscillations can lead to instability and blackouts if not controlled properly. Modern AC transmission grids sometimes use control systems to dampen the oscillations and improve the stability of the AC transmission grid. Some of the modern AC transmission grids use advanced control systems operating by means of, for instance, FACTS (Flexible AC Transmission Systems), HVDC (High Voltage Direct Current), SCADA (Supervisory Control and Data Acquisition), PMU (Phasor Measurement Unit), and EMS (Energy Management System) to dampen the oscillations and improve the stability of the grid. However, the available solutions at present could be expensive, and complex to install and maintain. Further, available solutions are limited by the accuracy and reliability of the models and algorithms used to optimize the operations of the AC transmission grids.

### Summary

Thus, it would be advantageous to achieve a method and a device to overcome, or at least alleviate, the above-mentioned drawbacks. In particular, it would be desirable to enable the efficient damping of power oscillation, such as inter-area oscillation, in an alternating current (AC) transmission grid. By employing an appropriate control method, the inter-area oscillation in an alternating current (AC) transmission grid, which can originate for different reasons (for example, changes in power demand, generator operations, or disturbances such as faults), can be effectively eliminated. To better address one or more of these concerns, a power oscillation damping (POD) controller, a method of dampening an inter-area oscillation in an alternating current (AC) transmission grid, and a system having the features defined in the independent claims are provided. Preferable embodiments are defined in the dependent claims.

Hence, according to a first aspect, a method of dampening an inter-area oscillation in an alternating current (AC) transmission grid is provided. The inter-area oscillation in the alternating current (AC) transmission grid is dampened by means of a power controllable system, comprising a hydrogen production system, connected to the AC grid. The method comprises receiving at least one parameter indicative of inter-area oscillation in the AC transmission grid. The method further comprises controlling a power provided to the power controllable system based on the at least one parameter, in order to dampen the inter-area oscillation.

An advantage associated with the claimed method is that the power controllable system connected to the AC grid is itself used to dampen inter-area oscillations in the alternating current (AC) transmission grid. This may mitigate the need of expensive and complex-to-install dampening control units.

The inter-area oscillation is a low-frequency oscillation, normally below or around 1 Hz. More commonly, the AC grid deals with the inter-area oscillation in the frequency range of 0.05-0.8 Hz. The inter-area oscillation may refer to a type of oscillatory behaviour observed in an electrical power system, particularly in the context of large interconnected power grids, for example AC transmission grids. The inter-area oscillations may involve the periodic exchange of power and energy between different areas or regions within the AC transmission grid. The inter-area oscillations may manifest as fluctuations in voltage, current, or power flow and may typically occur between major components, or groups of components, such as generators or loads, separated by significant distances.

The hydrogen production system refers to a set of processes and equipment designed to generate hydrogen. Hydrogen can be produced through various methods, such as electrolysis, steam methane reforming, or biomass gasification. The hydrogen production system may be an independent unit or integrated into the AC transmission grid to serve a dual purpose. Besides the primary function of generating hydrogen, the hydrogen production system may also be utilized as a means to dampen inter-area oscillations in the AC transmission grid, contributing to the stability and control of the overall electrical system. The power controllable system may be constituted of solely the hydrogen production system or may comprise one or more additional systems of other types, such as an energy storage system, as will be exemplified below.

The controlling the power may comprise controlling the power levels of the AC transmission grid. The act of controlling the power levels may comprise increasing or decreasing the power levels.

The at least one parameter indicative of inter-area oscillation in the AC transmission grid may comprise at least one of a frequency, a power, a voltage magnitude, and a voltage phase angle.

The parameter "power" in the context of AC transmission grids may refer to the electrical power being transmitted through a transmission line within the AC transmission grid. Similarly, the parameters "frequency", "voltage magnitude" and "voltage phase angle" in the context of AC transmission grids may be derived from the same/different components within the AC transmission grid.

It is advantageous to control the power provided to the power controllable system based on the at least one parameter received from the AC transmission grid. The controlling the power levels may help in maintaining the stability and efficient operation of the AC transmission grid. Even if the inter-area oscillation primarily may be referred to as a frequency variation it can be detected in different kinds of electrical quantities.

The act of controlling the power may further comprise determining a difference between the at least one parameter and a reference value or between two parameters originating from two areas of the transmission grid, and controlling the power based on the determined difference.

The difference between the at least one parameter and a reference value may be, for example, the difference between the frequency at which the AC transmission grid is operating at present and the reference frequency. The reference frequency for the AC transmission grid may be, for example, 50 Hz or 60Hz. The difference between two parameters originating from two areas of the transmission grid may be, for example, the difference between the frequency originating and received from two areas, such as two areas of the AC transmission grid where different synchronous machines are located.

The skilled person would understand that the frequency is a parameter used to exemplify but is not limited to only frequency as the parameter. Other parameters may be used to determine the difference. It may be advantageous to determine the difference between two parameters originating from two areas of the transmission grid in maintaining the stability and efficient operation between different areas of the AC transmission grid.

The act of controlling may comprise modulating the power in proportion to the difference. For instance, the modulation may be applied to the magnitude of the power provided to the power controllable system and be proportional to the difference.

The act of controlling the power may further comprise eliminating an effect of steady-state deviations from the at least one parameter by suppressing slow transients in the power provided to the power controllable system.

In the AC transmission grid, slow transients may involve variations in parameters such as power flow, voltage levels, and frequency. Examples of events leading to slow transients in an AC transmission grid include gradual changes in load demand, modifications in power generation patterns, or adjustments in the configuration of the power network.

The act of eliminating an effect of steady-state deviations may comprise suppressing slow transients in the controlled power provided to the power controllable system, (and/or) suppressing slow transients in the received one or more parameters, for instance, a frequency of the AC transmission grid.

The act of receiving at least one parameter may comprise receiving at least one local parameter from a point of common coupling, PCC, of the transmission grid, and/or receiving at least one remote parameter from a remote node.

The at least one local parameter from a PCC may comprise the parameter received from the location where the electrical characteristics of different components or subsystems of the AC transmission grid converge. In other words, the PCC refers to the point in the transmission grid where multiple systems or loads are electrically connected or coupled. For instance, the PCC may be an electrical node where the hydrogen production system is connected to the AC transmission grid. It is advantageous for analysing and controlling the interactions between various elements within the transmission grid for improved stability. The PCC may be a reference point for controlling and regulating the flow of power, maintaining voltage levels, and ensuring overall grid stability. Control devices and/or protective relays may be installed at or near the PCC.

The remote node may be a component or region of the AC transmission grid separated by distance. In other words, the remote node may typically refer to a device or a point that is located at a distance from a main control unit. The act of controlling the power may comprise controlling an active power provided to the power controllable system.

It is advantageous to control the active power provided to the power controllable system as controlling the active power may directly influence the active power flows or inter-area oscillations in the grid in contrast to reactive power modulation which influences the power oscillations via its influence on the voltage magnitudes in the grid which depends on the grid characteristics.

Active power modulation, in other words, the act of controlling the active power provided to the power controllable system, is often preferred. However, it should be noted that the claimed invention is not limited to controlling the active power, but it encompasses controlling the active power and/or the reactive power. Controlling the power depends on path of the power oscillations in the AC transmission grid and the placement of the power controllable system. In some cases, reactive power modulation, in other words, controlling the reactive power, may be a more effective way to achieve the act of controlling the power controllable system.

In some situations, whether to use active power modulation or reactive power modulation may be linked to a rectifier technology that is used to power the hydrogen production system. If a thyristor rectifier is used, reactive power modulation may not be possible since active power components and reactive power components may be difficult to control independently. On the other hand, if a Voltage Source Converter, VSC, rectifier is used, active power components and reactive power components may be controlled independently, which enables the use of active power modulation or reactive power components modulation or a combination of both.

The act of controlling may comprise compensating time delays between the power provided to the power controllable system and the at least one parameter or the difference by means of lead-lag filtering.

It is advantageous to compensate for the time delays as this may help in removing any asynchronization between the power provided to the power controllable system and the at least one parameter or the difference by means of lead-lag filtering. For instance, removing the time delays may help in bringing the power provided to the power controllable system in-phase with the at least one parameter, e.g. frequency, or the difference.

The hydrogen production system may be an electrolyser unit. The electrolyser unit may be a device that uses electricity to split water into hydrogen and oxygen. Various types of electrolyser units that exist today are for example, Alkaline Electrolysers (AE), Proton Exchange Membrane Electrolysers (PEM), Solid Oxide Electrolysers (SOE), and Molten Carbonate Electrolysers (MCE).

The act of controlling may comprise controlling a power reference signal and providing the power reference signal to the power controllable system. The power reference signal may be defined as a control signal controlling the amount of power to be provided to the power controllable system. Thus, the power reference signal may be sent to a control unit of the power controllable system, which control unit in turn controls the actual power providing units. An initial value for the power reference signal may be set manually to control the steady state power demand or hydrogen production rate or through an automatic high level control structure which may be used to optimize the plant operation on a longer timescale.

According to a second aspect, a power oscillation damping (POD) controller is provided for dampening an inter-area oscillation in an alternating current (AC) transmission grid, by means of a power controllable system, comprising a hydrogen production system, connected to the AC grid. The POD controller comprises a receiving unit configured to receive at least one parameter indicative of inter-area oscillation in the AC transmission grid. The POD controller is configured to control a power provided to the power controllable system based on the at least one parameter, in order to dampen the inter-area oscillation.

The POD controller may be further configured to determine a difference between the at least one parameter and a reference value or between two parameters originating from two areas of the transmission grid, and controlling the power based on the determined difference.

The POD controller may further comprise a first filter. The first filter may be configured to eliminate an effect of steady-state deviations from the at least one parameter by suppressing slow transients in the power provided to the power controllable system.

The first filter may be a washout filter. The first filter may eliminate an effect of steady-state deviations by supressing/filtering of slow transients/very low frequency signals, leaving the output, i.e. the power provided to the power controllable system, unaffected by those unwanted very low frequency signals.

The first filter may be configured to suppress the slow transients/very low frequency signals already from the at least one or more parameters received at the receiving unit and/or from the power provided to the power controllable system. The power oscillation damping (POD) controller may further comprise a lead-lag filter. The lead-lag filter may be configured to compensate time delays between the power provided to the power controllable system and the at least one parameter or the difference.

The lead-lag filter may be configured to remove the time delays, which removal may be advantageous in bringing the power provided to the power controllable system in-phase with the at least one parameter or the difference.

According to a third aspect, a system is provided for dampening an inter-area oscillation in an AC transmission grid. The system comprises a power controllable system, which in turn comprises a hydrogen production system, connected to the AC transmission grid, and a POD controller. The POD controller comprises a receiving unit configured to receive one or more parameters indicative of inter-area oscillation in the AC transmission grid. The POD controller is configured to control a power provided to the power controllable system based on the one or more parameters, in order to dampen the inter-area oscillation.

**Brief description of the drawings**

These and other aspects will now be described in more detail with reference to the appended drawings showing embodiments.

Figure 1 shows a flow chart for a method of dampening an inter-area oscillation in an alternating current (AC) transmission grid, by means of a power controllable system connected to the AC grid;

Figure 2 shows a flow chart for operations included in an operation of the method of Figure 1;

Figures 3 shows a block diagram representation of a power oscillation damping (POD) controller;

Figure 4 shows a block diagram representation of a system provided for dampening an inter-area oscillation in an AC transmission grid;

Figure 5 shows a block diagram representation of a hydrogen production system according to the present disclosure comprising one or more electrolyser units;

Figure 6 shows a block diagram representation of another example of a system provided for dampening an inter-area oscillation in an AC transmission grid.

All the figures are schematic, not necessarily to scale, and generally only show parts which are necessary in order to elucidate the embodiments, wherein other parts may be omitted or merely suggested. Like reference numerals refer to like elements throughout the description.

**Detailed description**

The present aspects will now be described more fully hereinafter with reference to the accompanying drawings, in which embodiments are shown. These aspects may, however, be embodied in many different forms and should not be construed as limited to the embodiments set forth herein; rather, these embodiments are provided for thoroughness and completeness, and fully convey the scope of the present aspects to those skilled in art. For example, features illustrated or described as part of one embodiment may be used with another embodiment to yield still a further embodiment.

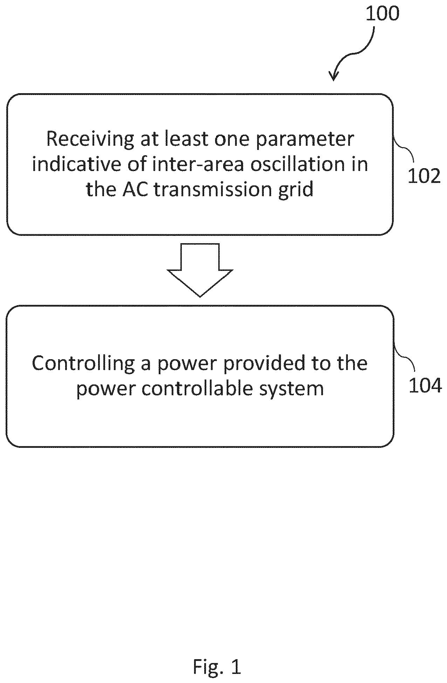

Referring to figure 1, according to an embodiment a method 100 of dampening an inter-area oscillation in an alternating current (AC) transmission grid is provided. The inter-area oscillation in the AC transmission grid is dampened by means of a power controllable system, comprising a hydrogen production system, connected to the AC transmission grid. The method 100 comprises receiving 102 at least one parameter indicative of inter-area oscillation in the AC transmission grid. The at least one parameter indicative of inter-area oscillation in the AC transmission grid may comprise at least one of a frequency, a power, a voltage magnitude, and a voltage phase angle. The act of receiving at least one parameter may comprise receiving at least one local parameter from a point of common coupling, PCC, of the transmission grid, and/or receiving at least one remote parameter from a remote node. The method further comprises controlling 104 a power provided to the power controllable system based on the at least one parameter, in order to dampen the inter-area oscillation. It is advantageous to control the power provided to the power controllable system based on the at least one parameter received from the AC transmission grid. Using a power controllable system, which comprises a hydrogen production system, by controlling its power levels is advantageous in maintaining the stability and efficient operation of the AC transmission grid. Further, the hydrogen production system is a suitable DC load connected to the AC transmission system to use for the dampening since the power rating can be significantly large and variations of the very production of hydrogen are often allowable to an extent that may occur when applying the power oscillation damping.

The act of controlling the power may be controlling an active power and/or controlling a reactive power provided to the power controllable system. However, controlling the active power may be advantageous since it directly influences the active power flows/oscillations in the AC transmission grid in contrast to reactive power modulation which influences the power oscillations via its influence on the voltage magnitudes in the AC transmission grid which depends on the grid characteristics.

According to an example of the method 100 of dampening an inter-area oscillation in an AC transmission grid, the act of receiving 102 at least one parameter indicative of inter-area oscillation in the AC transmission grid comprises receiving power related information in the context of AC transmission grids that may refer to the electrical power being transmitted through a transmission line within the AC transmission grid. Further, the act of controlling 104 comprises controlling an active power provided to the power controllable system based on the received power related information, in order to dampen the inter-area oscillation.

In another example, the act of controlling 104 may comprise additionally, or alternatively, controlling a reactive power provided to the power controllable system based on the received power related information, in order to dampen the inter-area oscillation. This means that the reactive power may be controlled to flow to or from the power controllable system.

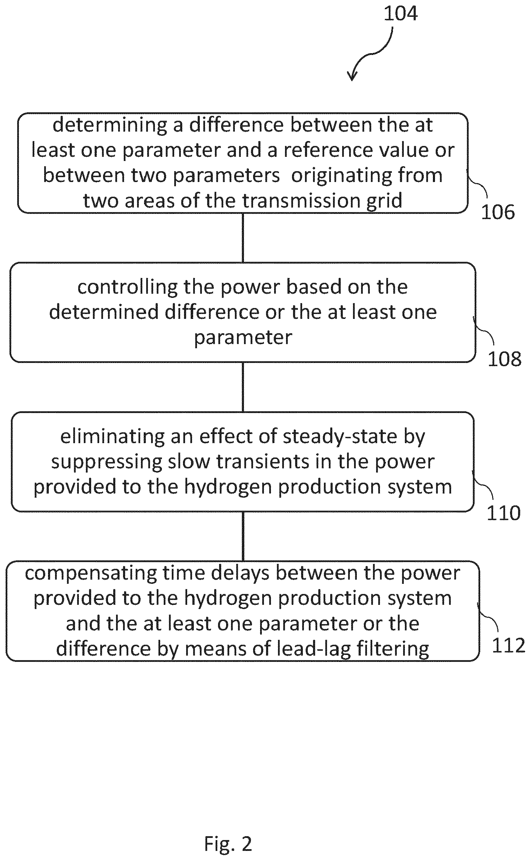

Referring to figure 2, according to an embodiment the act of controlling 104 the power provided to the power controllable system in the method 100 of dampening an inter-area oscillation in an AC transmission grid is further detailed. The act of controlling 104 the power may comprise one or more steps outlined in conjunction with Fig. 2. Additionally, the sequence depicted in Fig. 2 is not prescriptive/restrictive, and a skilled person would recognize the flexibility to execute the steps in a different order based on the chosen combination of steps. As illustrated in Fig.2, the act of controlling 104 the power further comprises determining 106 a difference between the at least one parameter and a reference value or between two parameters originating from two areas of the AC transmission grid, and controlling 108 the power based on the determined difference.

The act of controlling 104 the power further comprises eliminating 110 an effect of steady-state deviations from the at least one parameter by suppressing slow transients in the power provided to the power controllable system. Typically, the slow transients constituting the steady-state deviation are very low frequency changes close to a constant value.

The act of determining 106 the difference between the at least one parameter and a reference value may help in reducing the steady-state component of the at least one parameter. It may also be possible to remove that component using a wash-out filter. In such case, the at least one parameter (i. e. frequency) is fed directly to the wash-out filter. However, if a good approximation of the steady state value (e.g. 50 Hz) is at hand it may be a good idea to subtract the steady state value from the at least one parameter which may improve the performance of the controller.

As already stated, the act of controlling 104 the power may comprise one or more steps outlined in conjunction with Fig. 2, and a person skilled in the art would understand that in some situations step 106 may be skipped and then the following step of controlling the power 108 may be based on the received at least one parameter instead of on the determined difference. Furthermore, the act of controlling 104 comprises compensating 112 time delays between the power provided to the power controllable system and the at least one parameter or the difference by means of lead-lag filtering. Furthermore, the act of controlling 104 the power may comprise controlling a power reference signal and providing the power reference signal to the power controllable system, typically to a central control unit of the power controllable system, which in turn controls the devices, such as converters and/or rectifiers, actually feeding the power to the power consuming or power storing devices of the power controllable system. Additionally, or alternatively, the act of controlling 104 the power comprises controlling an active power signal and providing the active power signal to the power controllable system.

The skilled person would understand that if, for instance, the act of determining 106 the difference is not performed then the act of compensating 112 time delays may be performed between the power provided to the power controllable system and the at least one parameter, but not with the difference.

Further, the act of eliminating 110 an effect of steady-state deviations described above may be performed on the at least one parameter, and/or on the difference. Furthermore, the act of eliminating 110 an effect of steady-state deviations described above may be performed additionally/alternatively on the power provided to the power controllable system. The power provided to the power controllable system may be based on the at least one parameter and/or the difference.

According to an example of the method 100 of dampening an inter-area oscillation in an AC transmission grid, the act of controlling 104 comprises determining 106 a difference between the at least one parameter and a reference value, for example, the frequency difference from a nominal frequency, and/or electrical power difference from a nominal power being transmitted through a transmission line. The act of controlling 104 the active power further comprises eliminating 110 an effect of steady-state deviations by suppressing slow transients in the frequency difference and/or power difference. The act of controlling 104 furthermore comprises compensating 112 time delays between the power provided to the power controllable system and the frequency difference and/or power difference by means of lead-lag filtering.

The act of controlling 104 furthermore comprises providing 108 the power to the power controllable system.

As an example of how to modify the power reference signal with respect to the difference expressed as a frequency difference $\Delta f$, the following equation may be used:

$$\Delta P_{ref} = K_{0act} \frac{sT_W}{1+sT_W} \left(\frac{1+sT_D}{1+sT_F}\right)^2 \Delta f \qquad \text{Eqn. 1}$$

where $K_{0act}$ is a constant, s is a complex variable of Laplace transform, $T_W$ is the time constant of a washout filter, $T_D$ and $T_F$ are time constants of a lead-lag filter. In equation 1 the expression $sT_W/(1+sT_W)$ represents a washout filter for suppressing slow transients, and the expression $\left(\frac{1+sT_D}{1+sT_F}\right)^2$ represents a lead-lag filter. The equation can be equally applied for modifying the power in general.

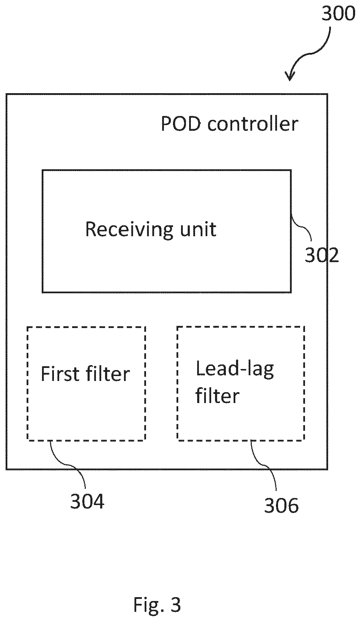

Fig. 3 schematically shows a block diagram representation of a power oscillation damping (POD) controller 300 configured to dampen an inter-area oscillation in an AC transmission grid, by means of a power controllable system, comprising a hydrogen production system, connected to the AC transmission grid. The POD controller 300 comprises a receiving unit 302 configured to receive at least one parameter indicative of inter-area oscillation in the AC transmission grid. Further, the POD controller 300 is configured to control a power provided to the hydrogen production system based on the at least one parameter, in order to dampen the inter-area oscillation.

The POD controller 300 may be further configured to determine a difference between the at least one parameter and a reference value or between two parameters originating from two areas of the transmission grid, and controlling the power based on the determined difference.

The POD controller 300 may further comprise a first filter 304. The first filter 304 may be configured to eliminate an effect of steady-state deviations from the at least one parameter by suppressing slow transients in the power provided to the power controllable system. The first filter 304 may be configured to suppress the slow transients/low frequency signals already from the at least one or more parameters received at the receiving unit and/or from the power provided to the power controllable system.

The POD controller 300 may further comprise a lead-lag filter 306. The lead-lag filter 306 may be configured to compensate for time delays between the power provided to the power controllable system and the at least one parameter or the difference.

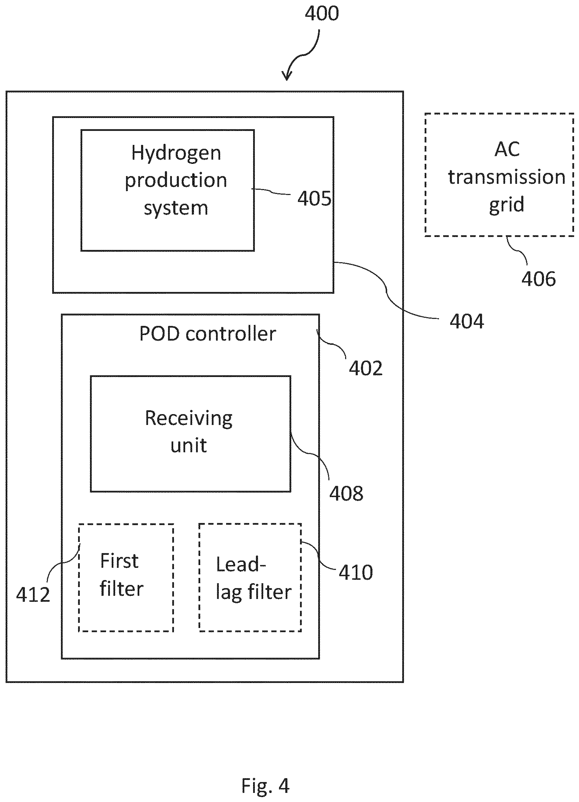

Fig. 4 schematically shows a block diagram representation of a system 400 provided for dampening of an inter-area oscillation in an AC transmission grid 406. The system 400 comprises a power controllable system 404, which comprises a hydrogen production system 405, and a POD controller 402. The power controllable system 404 is connected to the AC transmission grid 406. As mentioned above, the power controllable system 404 may comprise one or more other types of systems as well. The POD controller 402 is similar to the POD controller 300 disclosed in Fig. 3. The POD controller 402 typically comprises a receiving unit 408 configured to receive one or more parameters indicative of inter-area oscillation in the AC transmission grid 406. The POD controller 402 is configured to control a power provided to the power controllable system 404 based on the one or more parameters, in order to dampen the inter-area oscillation. The POD controller 402 may further comprise optional components such as the first filter 412 and the lead-lag filter 410 similar to that described in combination with Fig. 3. The POD controller 402 is configured to perform additional method steps as described above in conjunction with the flow chart illustrated in Fig. 2.

The control devices or the main control unit in the AC transmission grid 406 may operate as the POD controller 402. The control devices or the main control unit may be installed at or near the point of common coupling, PCC.

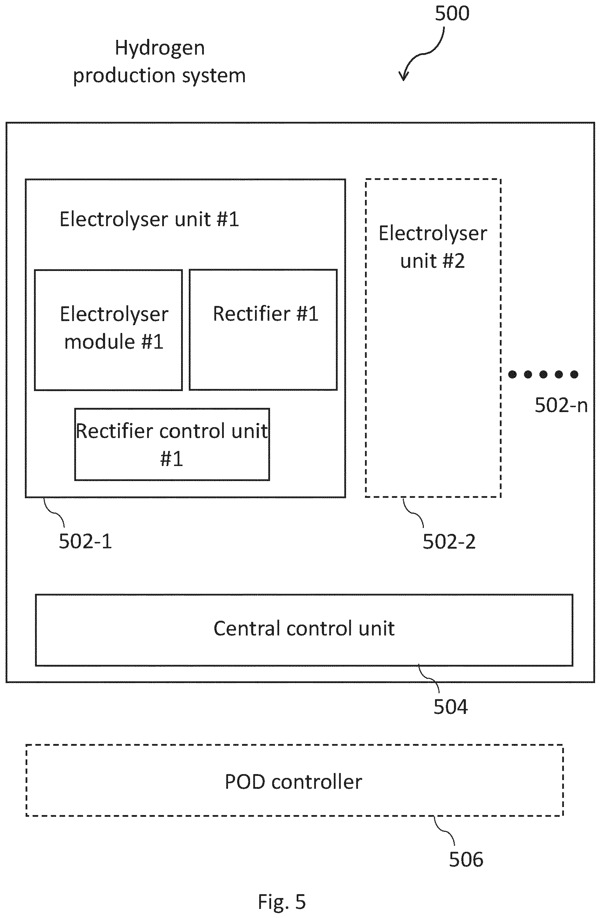

Fig. 5 schematically shows a block diagram representation of an example hydrogen production system 500. The hydrogen production system 500 in Fig. 5 is illustrated to comprise one or several electrolyser units 502-1, 502-2,..., 502-n. Each electrolyser unit 502-1, 502-2,..., 502-n may comprise an electrolyser module, a power electronic converter/rectifier, and a rectifier control unit for the power electronic converter/rectifier. The rectifier control units of the one or several electrolyser units 502-1, 502-2,..., 502-n are connected to a central control unit 504. The hydrogen production system 500 described using Fig. 5 is compatible to be used with the method, the POD controller and the system described above. For instance, the central control unit 504 of the hydrogen production system 500 can be further connected to the POD controller 506 described in combination with Fig. 3 to dampen inter-area oscillation in an AC transmission grid, by means of the hydrogen production system 500 that is further connected to the AC transmission grid. The POD controller 506 is configured to control a power provided to the hydrogen production system 500 based on one or more parameters received from the AC transmission grid, indicative of inter-area oscillation. The POD controller 506 when controlling the power provided to the hydrogen production system 500, provides the central control unit 504 with a central power reference signal. The central power reference signal may be an active power reference signal, $P_{ref}$, or a reactive power reference signal, $Q_{ref}$, or a combination of both. The central control unit 504 then determines corresponding individual power reference signals and provides them to each respective one of the rectifier control units of the one or several electrolyser units 502-1, 502-2,..., 502-n. Each of the rectifier control units provides the associated power electronic converter/rectifier with a power control signal which renders the power electronic converter/rectifier to feed the corresponding active power to the electrolyser module. Thus, when damping the power oscillation the central power reference signal is modified, such as modulated, and this modification is then propagated to the individual power reference signals such that the sum of the modifications of the individual power reference signals is equal to the modification of the central power reference signal. As an alternative, the POD controller 506 may be connected directly to the rectifier control units, and consequently be configured to provide the individual power reference signals.
The central power reference signal or individual power reference signals provided by the POD controller 506 to control the power fed to the hydrogen production system 500 may relate to solely the active power.

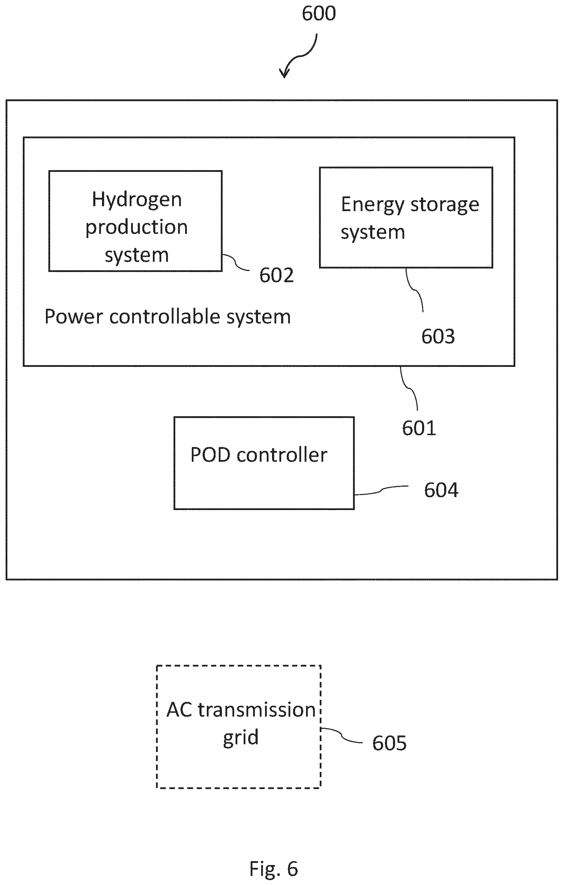

As shown in Fig. 6, in another example of the system 600 provided for dampening an inter-area oscillation in an AC transmission grid it is similar to the system described above in conjunction with Fig. 4, except for the power controllable system 601, which comprises both a hydrogen production system 602 and an energy storage system (ESS) 603. Thus, the POD controller 604 is provided for dampening an inter-area oscillation in an AC transmission grid 605, by means of the hydrogen production system 602 and the energy storage system 603 in combination. This may be advantageous if the hydrogen production system 602 includes electrolysers having a too slow dynamic response to be able to achieve the dampening effect alone.

Other variations to the disclosed embodiments can be understood and effected by those skilled in the art in practicing the claimed invention, from a study of the drawings, the disclosure, and the appended claims. In the claims, the word "comprising" does not exclude other elements or steps, and the indefinite article "a" or "an" does not exclude a plurality. The mere fact that certain measures are recited in mutually different dependent claims does not indicate that a combination of these measured cannot be used to advantage. Any reference signs in the claims should not be construed as limiting the scope.

**Claims**

1. A method of dampening an inter-area oscillation in an alternating current (AC) transmission grid, by means of a power controllable system, comprising a hydrogen production system, connected to the AC grid, the method comprising:

   receiving at least one parameter indicative of inter-area oscillation in the AC transmission grid;
   controlling a power provided to the power controllable system based on the at least one parameter, in order to dampen the inter-area oscillation.

2. The method according to claim 1, wherein the at least one parameter comprises at least one of a frequency, a power, a voltage magnitude, and a voltage phase angle.

3. The method according to claims 1 or 2, wherein said act of controlling the power further comprises determining a difference between the at least one parameter and a reference value or between two parameters originating from two areas of the transmission grid, and controlling the power based on the determined difference.

4. The method according to claim 3, wherein said act of controlling comprises modulating the power in proportion to the difference.

5. The method according to any one of the preceding claims, wherein said act of controlling the power further comprises eliminating an effect of steady-state deviations from the at least one parameter by suppressing slow transients in the power provided to the power controllable system.

6. The method according to any one of the preceding claims, wherein said act of receiving at least one parameter comprises receiving at least one local parameter from a point of common coupling of the transmission grid, and/or receiving at least one remote parameter from a remote node.

7. The method according to any one of the preceding claims, wherein said act of controlling the power comprises controlling an active power provided to the power controllable system.

8. The method according to any one of the preceding claims, wherein said act of controlling comprises compensating time delays between the power provided to the power controllable system and the at least one parameter or the difference by means of lead-lag filtering.

9. The method according to any one of the preceding claims, wherein the hydrogen production system is an electrolyser unit.

10. The method according to any one of the preceding claims, wherein the act of controlling comprises controlling a power reference signal and providing the power reference signal to the power controllable system.

11. A power oscillation damping controller (300) for dampening an inter-area oscillation in an alternating current (AC) transmission grid, by means of a power controllable system, comprising a hydrogen production system, connected to the AC grid, wherein the power oscillation damping controller comprises:

    a receiving unit (302) configured to receive at least one parameter indicative of inter-area oscillation in the AC transmission grid;
    wherein the power oscillation damping controller is configured to control a power provided to the power controllable system based on the at least one parameter, in order to dampen the inter-area oscillation.

12. The power oscillation damping power oscillation damping controller according to claim 11, wherein the power oscillation damping controller is further configured to determine a difference between the at least one parameter and a reference value or between two parameters originating from two areas of the transmission grid, and controlling the power based on the determined difference.

13. The power oscillation damping power oscillation damping controller according to claims 11 or 12, further comprising a first filter (304) configured to eliminate an effect of steady-state deviations from the at least one parameter by suppressing slow transients in the power provided to the power controllable system.

14. The power oscillation damping power oscillation damping controller according to claims 11-13, further comprises a lead-lag filter (306) configured to compensate time delays between the power provided to the power controllable system and the at least one parameter or the difference.

15. A system for dampening an inter-area oscillation in an alternating current (AC) transmission grid, wherein the system (400) comprises:

a power controllable system (404), comprising a hydrogen production system (405), connected to the AC transmission grid;
a power oscillation damping controller (402), comprising:

a receiving unit (408) configured to receive one or more parameters indicative of inter-area oscillation in the AC transmission grid;
wherein the power oscillation damping controller is configured to control a power provided to the power controllable system based on the one or more parameters, in order to dampen the inter-area oscillation.

100

Receiving at least one parameter
indicative of inter-area oscillation in
the AC transmission grid

102

Controlling a power provided to the
power controllable system

104

Fig. 1

104

> determining a difference between the at least one parameter and a reference value or between two parameters originating from two areas of the transmission grid

106

> controlling the power based on the determined difference or the at least one parameter

108

> eliminating an effect of steady-state by suppressing slow transients in the power provided to the hydrogen production system

110

> compensating time delays between the power provided to the hydrogen production system and the at least one parameter or the difference by means of lead-lag filtering

112

Fig. 2

300

POD controller

Receiving unit

302

First filter

Lead-lag filter

304

306

Fig. 3

400

Hydrogen
production
system

405

AC
transmission
grid

404

406

POD controller

402

Receiving
unit

408

First
filter

Lead-
lag filter

410

412

Fig. 4

500

Hydrogen
production system

Electrolyser unit #1

Electrolyser
module #1

Rectifier #1

Rectifier control unit
#1

502-1

Electrolyser
unit #2

502-n

502-2

Central control unit

504

POD controller

506

Fig. 5

600

Hydrogen
production
system

602

Energy storage
system

603

Power controllable system

601

POD controller

604

AC transmission
grid

605

Fig. 6

# EUROPEAN SEARCH REPORT

**Application Number**

EP 24 16 0256

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2014/327404 A1 (MARKOWZ GEORG [DE] ET AL) 6 November 2014 (2014-11-06) <br> * paragraph [0001] - paragraph [0007] * <br> * paragraph [0036] - paragraph [0050]; claims 20-22, 27-29 * <br> * paragraph [0132] - paragraph [0137]; figure 3 * | 1-15 | INV. <br> H02J3/24 <br> H02J3/28 <br> H02J15/00 |
| X | US 2015/105923 A1 (BEEKMANN ALFRED [DE]) 16 April 2015 (2015-04-16) <br> * paragraph [0003] - paragraph [0008] * <br> * paragraph [0016] - paragraph [0053]; claim 1 * | 1-15 | |
| X | WO 2024/021532 A1 (SUNGROW POWER SUPPLY CO LTD [CN]) 1 February 2024 (2024-02-01) <br> * abstract * <br> * page 1, line 6 - page 4, line 12 * | 1-15 | |
| A | WO 2012/041527 A1 (SIEMENS AG [DE]; ANDRESEN BJOERN [DK] ET AL.) 5 April 2012 (2012-04-05) <br> * page 1, line 14 - page 3, line 14 * <br> * page 11, line 5 - line 17 * <br> * page 24, line 19 - page 25, line 2 * | 1-15 | **TECHNICAL FIELDS SEARCHED (IPC)** <br><br> H02J |
| A | ANONYMOUS ED - ANONYMOUS: "IEEE guide for planning DC links terminating at AC locations having low short-circuit capacities", 31 December 1997 (1997-12-31), IEEE STANDARD; [IEEE STANDARD], IEEE, PISCATAWAY, NJ, USA, XP017600236, <br> * 4.7 AC system instabilities; page 57 - page 58 * | 1-15 | |

The present search report has been drawn up for all claims

| Place of search | Date of completion of the search | Examiner |
|---|---|---|
| Munich | 5 August 2024 | Mäki-Mantila, Harri |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 16 0256

This annex lists the patent family members relating to the patent documents cited in the above-mentioned European search report.
The members are as contained in the European Patent Office EDP file on
The European Patent Office is in no way liable for these particulars which are merely given for the purpose of information.

05-08-2024

| Patent document cited in search report | Publication date | Patent family member(s) | Publication date |
|---|---|---|---|
| US 2014327404 A1 | 06-11-2014 | DE 102011055229 A1 | 16-05-2013 |
| | | EP    2777122 A1 | 17-09-2014 |
| | | US 2014327404 A1 | 06-11-2014 |
| | | WO 2013068256 A1 | 16-05-2013 |
| US 2015105923 A1 | 16-04-2015 | AR     090226 A1 | 29-10-2014 |
| | | AU 2013224844 A1 | 04-09-2014 |
| | | CA    2865537 A1 | 06-09-2013 |
| | | CL 2014002312 A1 | 19-12-2014 |
| | | CN  104160575 A | 19-11-2014 |
| | | DE 102012203334 A1 | 05-09-2013 |
| | | EP    2820736 A2 | 07-01-2015 |
| | | EP    3968483 A1 | 16-03-2022 |
| | | ES    2901733 T3 | 23-03-2022 |
| | | JP 2015513890 A | 14-05-2015 |
| | | KR 20140131581 A | 13-11-2014 |
| | | MX     338673 B | 27-04-2016 |
| | | NZ     628836 A | 24-06-2016 |
| | | RU 2014139839 A | 20-04-2016 |
| | | TW  201340534 A | 01-10-2013 |
| | | US 2015105923 A1 | 16-04-2015 |
| | | WO 2013128023 A2 | 06-09-2013 |
| | | ZA  201405212 B | 29-04-2015 |
| WO 2024021532 A1 | 01-02-2024 | CN  115117903 A | 27-09-2022 |
| | | WO 2024021532 A1 | 01-02-2024 |
| WO 2012041527 A1 | 05-04-2012 | AU 2011307125 A1 | 14-03-2013 |
| | | BR 112013006534 A2 | 31-05-2016 |
| | | CA    2812627 A1 | 05-04-2012 |
| | | CA    2812708 A1 | 05-04-2012 |
| | | CN  103119817 A | 22-05-2013 |
| | | CN  103119818 A | 22-05-2013 |
| | | DK    2594004 T3 | 30-03-2015 |
| | | DK    2594005 T3 | 28-11-2016 |
| | | EP    2594004 A1 | 22-05-2013 |
| | | EP    2594005 A1 | 22-05-2013 |
| | | ES    2537445 T3 | 08-06-2015 |
| | | JP 2013546290 A | 26-12-2013 |
| | | KR 20130100159 A | 09-09-2013 |
| | | KR 20170126017 A | 15-11-2017 |
| | | NZ     607114 A | 31-10-2014 |
| | | RU 2013119655 A | 10-11-2014 |
| | | US 2013175871 A1 | 11-07-2013 |
| | | US 2014361537 A1 | 11-12-2014 |
| | | WO 2012041527 A1 | 05-04-2012 |

EPO FORM P0459

For more details about this annex : see Official Journal of the European Patent Office, No. 12/82

page 1 of 2

## ANNEX TO THE EUROPEAN SEARCH REPORT
## ON EUROPEAN PATENT APPLICATION NO.

EP 24 16 0256

This annex lists the patent family members relating to the patent documents cited in the above-mentioned European search report.
The members are as contained in the European Patent Office EDP file on
The European Patent Office is in no way liable for these particulars which are merely given for the purpose of information.

05-08-2024

| Patent document cited in search report | Publication date | Patent family member(s) | Publication date |
|---|---|---|---|
| | | WO 2012041543 A1 | 05-04-2012 |

EPO FORM P0459

For more details about this annex : see Official Journal of the European Patent Office, No. 12/82

page 2 of 2